Europäisches Patentamt

European Patent Office

Office européen des brevets

(19)

(11) Veröffentlichungsnummer : **0 023 054**
**B1**

(12)

# EUROPÄISCHE PATENTSCHRIFT

(45) Veröffentlichungstag der Patentschrift :
08.02.84

(21) Anmeldenummer : 80200587.6

(22) Anmeldetag : 20.06.80

(51) Int. Cl.³ : **B 01 D 53/34// B01D53/02**

(54) Verfahren zum Reinigen von organische Schadstoffe enthaltender Abluft.

(30) Priorität : 27.06.79 DE 2925864

(43) Veröffentlichungstag der Anmeldung :
28.01.81 Patentblatt 81/04

(45) Bekanntmachung des Hinweises auf die Patenterteilung : 08.02.84 Patentblatt 84/06

(84) Benannte Vertragsstaaten :
DE FR GB IT

(56) Entgegenhaltungen :
DE-A- 2 300 761
DE-A- 2 352 075
DE-A- 2 507 817
DE-A- 2 602 172
DE-B- 1 144 861
DE-B- 1 933 050
DE-C-  711 523
DE-C-  876 885
Die Akte enthält technische Angaben, die nach dem Eingang der Anmeldung eingereicht wurden und die nicht in dieser Patentschrift enthalten sind.

(73) Patentinhaber : METALLGESELLSCHAFT AG
Reuterweg 14 Postfach 3724
D-6000 Frankfurt/M.1 (DE)
Daimler Benz Aktiengesellschaft
Postfach 202
D-7000 Stuttgart 60 (DE)

(72) Erfinder : Bräuer, Hans-Werner, Dr. Dipl.-Chem.
Wingertstrasse 15
D-6308 Butzbach (DE)
Erfinder : Kraus, Reinhard
Wengertsteige 87
D-7031 Holzgerlingen (DE)
Erfinder : Mass, Horst-Dieter, Dipl.-Ing.
Hegaustrasse 10
D-7000 Stuttgart 30 (DE)

(74) Vertreter : Fischer, Ernst, Dr.
Reuterweg 14
D-6000 Frankfurt am Main 1 (DE)

## Verfahren zum Reinigen von organische Schadstoffe enthaltender Abluft

Die Erfindung betrifft ein Verfahren zum Entfernen von organischen Schadstoffen, einschließlich im Temperaturbereich von 160 bis 200 °C siedender Schadstoffe aus aus der Lacktrocknung und dem Einbrennen der Unterbodenbeschichtung bei der Automobilherstellung stammender Abluft mittels Adsorption an im Festbett angeordneter körniger Aktivkohle und Desorption der Beladung der Aktivkohle.

Es ist bekannt, Abluft der erwähnten Art einer Verbrennungsanlage zuzuführen und dort bei Temperaturen von 750 bis 850 °C die Schadstoffe rückstandsfrei zu verbrennen. Die heißen Abgase dienen dann beispielsweise zum Beheizen der Lacktrockner und zum Vorwärmen der zu reinigenden Abluft.

Ein anderes bekanntes Verfahren ist die adsorptive Abscheidung der Schadstoffe an Aktivkohle. Schon seit langem wird Aktivkohle besonders zum Abscheiden von organischen Lösemitteln im Siedebereich bis ca. 140 °C eingesetzt. Dabei wird die erschöpfte, d. h. bis zu ihrer Sättigung beladene Aktivkohle durch Einblasen von Wasserdampf wieder von den adsorbierten Stoffen befreit und regeneriert. Bei der Reinigung von Lacktrockner-Abluft wäre es zu vermuten, daß diese Art der Regeneration nicht angewandt werden kann.

Die Abluft aus Lacktrocknungseinrichtungen enthält unterschiedliche Substanzen aus verschiedenen Lackschichten und zusätzlichen Schutzmaßnahmen, wie z. B. Unterbodenschutz. Zu den Schadstoffen der Abluft zählen deshalb neben Lösemittel auch Weichmacher, wobei diese Stoffe vor allem einen Siedebereich von etwa 150 bis 220 °C aufweisen. Die zum Einsatz kommenden Weichmacher sieden sogar selbst unter reduziertem Druck von 25 mbar erst bei 255 bis 265 °C. Die genannten Stoffe gelangen nun während der Einbrennphase in die Abluft der Trockner und damit auch auf die Aktivkohle. Darüber hinaus entstehen auch noch im unkontrollierten Umfang Krack- und Polymerisationsprodukte, die dann ebenfalls auf der Aktivkohle abgeschieden werden.

Unter diesen Voraussetzungen ist es verständlich, daß man bisher davon ausgang, zur Regeneration der so beladenen Aktivkohle sehr hohe Temperaturen anwenden zu müssen. Zur Vermeidung von Bränden der Aktivkohle war dabei darauf zu achten, daß das Desorptionsgas weitgehend frei von Sauerstoff ist. Die bekannte Regeneration der Aktivkohle erfolgt durch heiße Inertgase, die z. B. durch Verbrennen von Propan oder Heizöl erzeugt wurden. Die Temperaturen Dieser Gase lagen bei etwa 500 °C. Die Desorptionsgase wurden einer thermischen Verbrennungsanlage zugeführt. Ein nach diesem Prinzip arbeitendes Verfahren ist in der Zeitschrift « Oberfläche + JOT » (1978), Seiten 775 bis 777, beschrieben.

Bei diesem bekannten Verfahren zeigt sich aber, daß trotz der relativ hohen Desorptionstemperatur das Schüttgewicht der Kohle immer weiter ansteigt, weil die Menge der nicht mehr desorbierbaren Stoffe ständig zunimmt. Die Folge ist auch eine von Zyklus zu Zyklus immer kürzer werdende Beladezeit, der Aktivkohle. Dem Ansteigen des Schüttgewichtes durch Polymerisationsprodukte auf der Kohle kann durch eine Reaktivierung bei Temperaturen von etwa 750 °C entgegengewirkt werden, wobei aber Kohlenstoff abgebrannt wird. Zu dieser Reaktivierung ist es darüber hinaus erforderlich, entweder die verbrauchte Aktivkohle aus dem Adsorber auszutragen und extern in einem speziellen Ofen zu reaktivieren oder aber die Adsorber selbst als Reaktivierungsöfen auszubilden. Während im ersten Fall durch den Transport der Kohle ein erheblicher Abrieb auftritt, der pro Reaktivierung einige Prozent betragen kann, ist im zweiten Fall ein großer Aufwand an hoch temperaturbeständigen und damit teuren Materialien erforderlich. In beiden Fällen ist schließlich noch der unvermeidbare Aktivkohle-Abbrand ein zusätzlicher Verlustfaktor.

Der Erfindung liegt die Aufgabe zugrunde, diese Nachteile zu vermeiden und bei guter Reinigungswirkung die Desorption der Aktivkohle auf einfache Weise durchzuführen. Die Aufgabe wird durch die im kennzeichnenden Teil des Anspruchs angegebenen Merkmale gelöst.

Bei diesem Verfahren wird zur Desorption der Aktivkohle auf das ansonsten übliche Inertgas verzichtet. Die spezielle Aktivkohle erlaubt die Desorption mittels Wasserdampf, wobei die Temperaturen im Aktivkohlebett überraschend niedrig gehalten werden können, ohne daß die Desorptionswirkung darunter leidet. Es kann zweckmäßig sein, stäbchenförmige Aktivkohle zu verwenden, bei welcher das Verhältnis von Durchmesser zu Länge im Bereich von 1 : 1 bis 1 : 4 liegt.

Trotz der niedrigen Desorptionstemperatur gelingt es, Schadstoffe mit höherer Siedetemperatur aus der Aktivkohle wieder zu entfernen. Die bei der Desorption aus der Aktivkohle entfernten Schadstoffe haben eine häufigste Siedetemperatur von 160 bis 200 °C und mindestens 60 Gew.% der desorbierten Schadstoffe weisen einen Siedepunkt von mindestens 170 °C auf. Die Desorption dieser Schadstoffe stellt einen besonderen Vorteil des Verfahrens dar.

Vor der Adsorption im Aktivkohlebett ist die Abluft zunächst indirekt auf Temperaturen zwischen 20 und 80 °C zu kühlen und Kondensat, das bereits Schadstoffe enthält, abzutrennen. Durch diese indirekte Kühlung können vor allem auch Weichmacher bereits aus der Abluft entfernt werden. Es ist prinzipiell möglich, die Kühlung vor der Adsorption auch durch eine Naßwäsche durchzuführen, doch wird eine trockene Kühlung erfindungsgemäß durchgeführt, weil man dadurch vermeiden kann, das bei einer Naßwäsche zwangsläufig anfallende Abwasser zu reinigen.

Die Abluft aus Lacktrocknungseinrichtungen, wie man sie z. B. in der Automobilindustrie findet, enthält verschiedenartigste organische Schadstoffe, deren Siedepunkte etwa im Bereich von 50 bis 250 °C liegen. Die Abluft weist zumeist pro m³ bis zu 3 000 mg C an organischen Schadstoffen auf. Durch das zuvor erläuterte Verfahren gelingt die Reinigung solcher Abluft auf überraschend einfache und kostengünstige Weise. Die Menge an Desorptionsdampf pro Stunde liegt im Bereich von 50 bis 300 kg pro m² Bettoberfläche.

Versuche werden z. B. in folgender Weise durchgeführt.

Bei der Trocknung der Spritzlackierung und Unterbodenbeschichtung in einem Automobilwerk fallen pro Stunde 700 m³ Abluft an. Die Abluft enthält Lösemittel und Weichmacher sowie unbekannte Stoffe in einer Konzentration, die zwischen 2 000 und 3 000 mg C pro m³ schwankt. Die Temperatur der Abluft liegt zunächst bei 80 °C. In einer Waschstufe und einem nachgeschaltetem Trockenfilter wird die Luft auf 35 °C abgekühlt und gleichzeitig auch ein gewisser Prozentsatz der Schadstoffbeladung, im wesentlichen Weichmacher, abgeschieden. Die mit Wasserdampf praktisch gesättigte Luft wird dann durch ein Gebläse durch das Aktivkohle-Festbett gedrückt. Das Adsorptionsbett hat einen Durchmesser von 0,6 m und eine Höhe von 2 m. Es wird eine stäbchenförmige Aktivkohle mit einem Durchmesser von 4 mm, einer Länge von 6 mm, einer BET-Oberfläche von etwa 1 300 m²/g und einem Schüttgewicht zwischen 300 und 350 g/l verwendet.

Die Beladung wird jeweils bei einem Schadstoff-Durchbruch von ca. 150 mg/m³ abgebrochen und die Aktivkohle mittels Wasserdampf desorbiert. Während der Desorption mit Wasserdampf liegt die Temperatur in der Aktivkohleschicht zwischen 105 und 120 °C. Trotzdem gelingt es, die adsorbierten Stoffe wieder so weit zu desorbieren, daß nach Einstellung einer gewissen Grundbeladung kein weiterer Anstieg des Schüttgewichts festzustellen ist. Auch die Adsorptionskapazität der Kohle, gemessen über die Benzolisotherme, bleibt unverändert. Es zeigt sich ferner, daß unter den vorteilhaften Desorptionsbedingungen keine Polymerisations- und Pyrolysereaktionen oder andere Kohleschädigungen auftreten. Auch ist die Bildung von Säuren durch Zersetzungen bzw. Oxidation sehr gering.

Das entstehende Gemisch aus Wasserdampf und Desorbat wird zunächst durch Kondensation weiterverarbeitet. Die desorbierten Lösemittel können dadurch vollständig zurückgewonnen werden. Untersuchungen der organischen Phase des desorbierten Kondensates ergeben, daß das Siedemaximum der desorbierten Stoffe bei etwa 175 °C liegt und daß etwa 85 % der desorbierten Stoffe einen Siedepunkt von 170 °C und darüber besitzen. Das Desorbat ist wasserklar und nahezu farblos, so daß es als Reinigungsmittel wieder verwendet werden kann. Es zeigt sich also, daß trotz der niedrigen Desorptionstemperaturen auch die wesentlich höher siedenden Lösemittel von der Aktivkohle desorbiert werden.

Während der Versuchsreihen wird auch die für die Desorption verwendete Wasserdampfmenge variiert. Die besten Ergebnisse werden mit einer Wasserdampfmenge pro Stunde von 95 bis 185 kg/m² Bettoberfläche erzielt. Eine Verringerung, bzw. Steigerung der Wasserdampfrate ergibt keine Verbesserung, sondern zumeist eine Verschlechterung der Desorptionsgüte, auch wenn man die Desorptionsdauer entsprechend anpaßt.

Bei verschiedenen Versuchen wird auch noch die ursprüngliche Vorreinigung der Abluft vor Eintritt in das Aktivkohlebett verändert. Die Abluft wird nun durch einen indirekt arbeitenden Luftkühler mit nachgeschaltetem Tropfenabscheider geleitet. Die Verschmutzung der Kühlerflächen durch abgeschiedene Schadstoffe, insbesondere Weichmacher, kann durch periodisches Abschmelzen mittels Wasserdampf beseitigt werden. Diese Art der Vorreinigung der Abluft vermeidet, daß ein verschmutztes Abwasser anfällt, dessen Reinigung ein weiteres Problem darstellt.

**Anspruch**

Verfahren zum Entfernen von organischen Schadstoffen, einschließlich im Temperaturbereich von 160 bis 200 °C siedender Schadstoffe, aus aus der Lacktrocknung und dem Einbrennen der Unterbodenbeschichtung bei der Automobilherstellung stammender Abluft mittels Adsorption an im Festbett angeordneter körniger Aktivkohle und Desorption der Beladung der Aktivkohle, dadurch gekennzeichnet, daß man die Abluft indirekt auf Temperaturen zwischen 20 und 80 °C kühlt und Kondensat abtrennt, die gekühlte Abluft durch die im Festbett angeordnete körnige Aktivkohle leitet, wobei die Aktivkohle eine Korngröße im Bereich von etwa 2 bis 6 mm, ein Schüttgewicht von 300 bis 350 g/l und eine spezifische Oberfläche (nach BET) von 800 bis 1 800 m²/g aufweist, und daß man zur Desorption der Beladung der Aktivkohle Wasserdampf verwendet, dabei das Aktivkohlebett auf Temperaturen von 100 bis 150 °C erhitzt und ein Schadstoffe enthaltendes Desorbat ableitet.

**Claim**

Process for removing organic pollutants, including pollutants boiling in the temperature range of 160 to 200 °C, from exhaust air obtained in an automobile manufacturing plant from paint drying and baking of underbody coating, said exhaust air is treated by adsorption in a fixed bed of granular activated carbon and desorbing the pollutants from the activated carbon, characterized in that the exhaust air is indirectly cooled to temperatures between 20 and 80 °C and removing condensate, the resultant cooled exhaust air is fed through the fixed bed of activated carbon, said activated carbon having a particle size in the range of about 2 to 6 mm, a bulk density of 300 to 350 g/l and a BET surface area of 800 to 1 800 m²/g, for the desorbing treatment steam is used to remove the pollutants from the activated carbon and the bed of activated carbon is heated therewith to temperatures in the range of 100 to 150 °C, and a pollutants containing desorbate is withdrawn.

**Revendication**

Procédé pour débarrasser de substances organiques nocives, y compris de substances nocives bouillant dans la gamme de températures allant de 160 à 200 °C, l'air résiduaire provenant du séchage de peinture et du passage au four du revêtement des dessous dans la fabrication d'automobiles, au moyen d'une adsorption sur du charbon actif en grains disposé en lit fixe, et d'une désorption de la charge du charbon actif, caractérisé en ce qu'il consiste à refroidir l'air résiduaire par voie indirecte, à des températures comprises entre 20 et 80 °C, et à séparer le produit condensé, à envoyer l'air résiduaire refroidi dans le charbon actif en grains disposé en lit fixe, le charbon actif ayant une granulométrie comprise entre 2 et 6 mm environ, une densité apparente de 300 à 350 g/l et une surface spécifique (suivant BET) de 800 à 1 800 m²/g, et à utiliser de la vapeur d'eau pour la désorption de la charge du charbon actif, le lit de charbon actif étant réchauffé alors à des températures de 100 à 150 °C, et un produit désorbé contenant des substances nocives étant évacué.